Europäisches Patentamt

European Patent Office

Office européen des brevets

(11) Publication number: **0 419 904 A2**

## EUROPEAN PATENT APPLICATION

(21) Application number: **90117113.2**

(22) Date of filing: **05.09.90**

(51) Int. Cl.⁵: **G06F 3/14, G06F 1/04**

(30) Priority: **29.09.89 JP 254951/89**

(43) Date of publication of application:
**03.04.91 Bulletin 91/14**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Shimamoto, Hajime, c/o Intellectual**
**Property Div.**
**Kabushiki Kaisha Toshiba, 1-1 Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) **Method and system for controlling CPU wait time in computer capable of connecting externally provided input/output controller.**

(57) In a computer system, depending on the presence/absence of an externally provided display controller (16), "1 WAIT" or "2 WAIT" is set as a CPU wait time. A ready generator (17) outputs a ready signal to a CPU (11) on the basis of the CPU wait time. That is, when the externally provided display controller (16) is connected, a flip-flop is reset. When an externally provided display controller (16) is not connected, the flip-flop is set. Therefore, a CPU ready signal is output earlier than in a case wherein the externally provided controller (16) is connected, so that the CPU wait time can be shortened.

FIG. 2

# METHOD AND SYSTEM FOR CONTROLLING CPU WAIT TIME IN COMPUTER CAPABLE OF CONNECTING EXTERNALLY PROVIDED INPUT/OUTPUT CONTROLLER

The present invention relates to a method and a system for controlling a CPU wait time in a computer capable of connecting an externally provided input/output controller.

In a laptop type personal computer, an external display controller connected to an internal bus through an external bus is used in addition to an internal display controller for controlling a VRAM (video random access memory). When data is to be read out from or written in the VRAM, a read/write signal is output from a CPU (central processing unit). While monitoring the read/write signal output from the CPU, a display controller outputs a ready signal to the CPU at a predetermined timing.

The ready signal output from the display controller is used for providing a wait time to an operation of the CPU. More specifically, since a display device is generally asynchronously operated with the operation of the CPU, it is necessary to control the display device using the display controller.

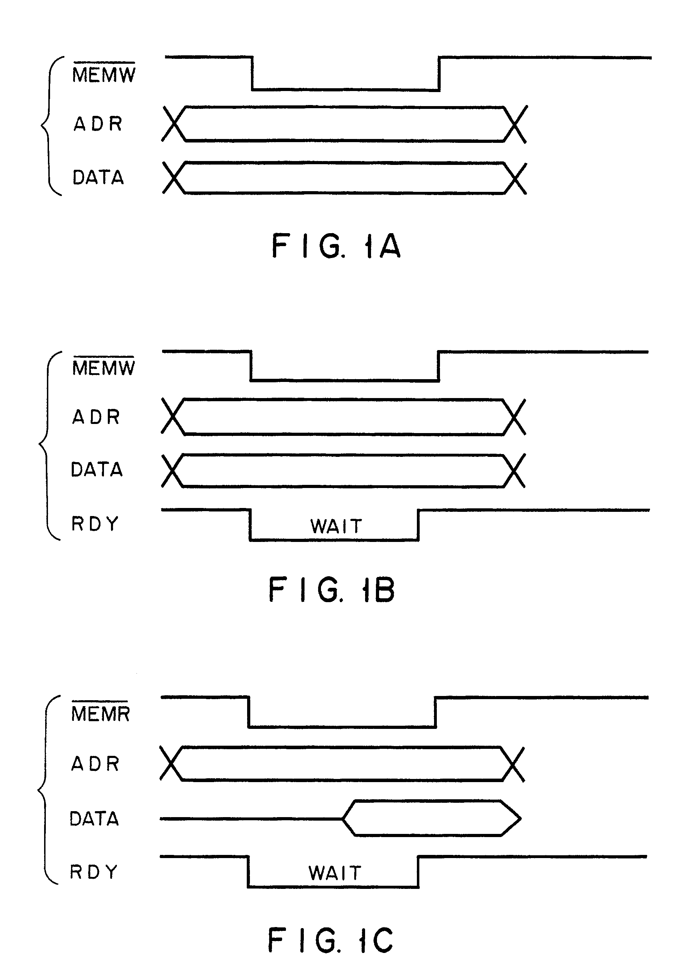

When data is written in a main memory (see Fig. 1A), since the wait time is set to be a constant value, a ready signal is not output. Note that, when a write signal (MEMW) is in a low-level, data is written in the main memory. On the other hand, when data is to be written in the VRAM (see Fig. 1B), and when writing of the data in the VRAM is enabled, a ready signal RDY is output from the display controller to the CPU. In addition, when data is read out from the VRAM (see Fig. 1C), a ready signal RDY is output from the display controller to the CPU. Note that, when a read signal (MEMR) is in a low-level, data is read out from the VRAM.

In the conventional computer capable of connecting an external I/O (input/output) controller, even if the external I/O controller is not connected, a ready signal is output from the display controller at the same timing as in a case wherein the external I/O controller is connected. Therefore, even if the external I/O controller is not connected, the wait time cannot be shortened and an access of the internal I/O controller or a processing of the CPU cannot be performed at a high speed.

As a result, a demand has arisen for a computer system wherein a wait time of the CPU can be shortened when an external I/O controller is not connected.

It is an object of the present invention to provide a method and system for controlling a CPU (central processing unit) wait time in a computer capable of connecting an externally provided input/output controller.

According to one aspect of the present invention, there is provided a method of controlling a wait time of a CPU in a computer capable of connecting an externally provided input/output controller, the computer having an internally provided input/output controller, the method comprising the steps of:
checking whether or not the internally provided input/output controller is enabled;
checking whether or not the externally provided input/output controller is connected to the computer;
checking whether or not a subject to be controlled by one of the internally provided input/output controller and the externally provided input/output controller is accessed by the CPU;
setting the wait time in accordance with check results; and
generating a ready signal in response to the set wait time to provide the ready signal to the CPU.

According to another aspect of the present invention, there is provided a system for controlling a wait time of a CPU in a computer capable of connecting an externally provided input/output controller, the computer having an internally provided input/output controller, the system comprising:
checking means for checking whether or not the internally provided input/output controller is enabled, checking whether or not the externally provided input/output controller is connected to the computer, and checking whether or not a subject to be controlled by the internally provided input/output controller and the externally provided input/output controller is accessed by the CPU;
setting means for setting the wait time in accordance with check results; and
generating means for generating a ready signal in response to the set wait time to provide the ready signal to the CPU.

This invention can be more fully understood from the following detailed description when taken in conjunction with the accompanying drawings, in which:

Figs. 1A to 1C are output timing charts of a ready signal in a data read/write;

Fig. 2 is a block diagram showing an arrangement of a system according to an embodiment of the present invention;

Fig. 3 is a diagram showing an arrangement of a ready generator of the system according to the embodiment;

Fig. 4 is a flow chart for setting a CPU wait time;

Fig. 5 is a diagram showing an arrangement of a signal generator of the ready generator; and

Figs. 6 and 7 are operational timing charts of the ready generator during "1 WAIT" and "2 WAIT" CPU wait times.

An embodiment of the present invention will be described with reference to the accompanying drawings.

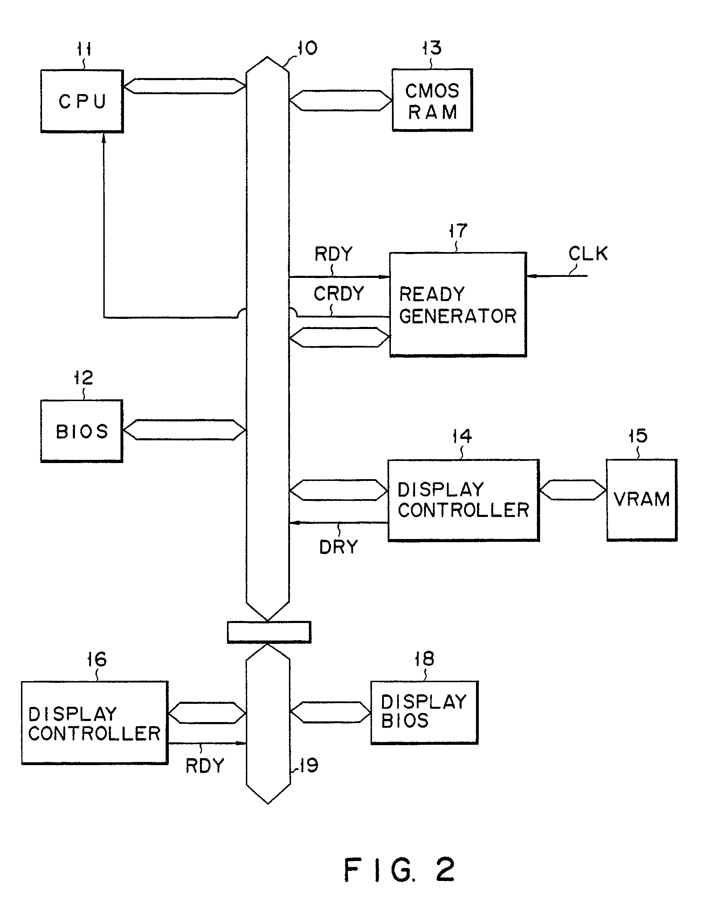

In Fig. 2, a computer system according to the embodiment comprises an internal bus 10, a CPU (central processing unit) 11, a BIOS (basic input/output system) 12, a CMOS RAM (complementary metal oxide semiconductor random access memory) 13, a display controller 14, a VRAM (video RAM) 15, a display controller 16, a ready generator 17, a display BIOS 18, and an external bus 19.

The CPU 11 controls the entire computer system.

The BIOS 12 controls an output timing of a ready signal from the ready generator 17 or the like.

The CMOS RAM 13 stores setup data of the display controller 14 or the like. In addition, status data indicating whether or not the display controller 14 is enabled is also stored in the CMOS RAM 13.

The display controller 14 performs display control of a display device (not shown), and outputs a ready signal RDY.

The VRAM 15 stores image data to be displayed on the display device or the like.

The display controller 16 connected to the internal bus 10 through the external bus 19 performs display control of the display device and outputs a ready signal RDY.

The ready generator 17 outputs a CPU ready signal CRDY to the CPU 11 in response to the ready signals RDY from the display controllers 14 and 16. Note that a CPU clock signal CLK is input to the ready generator 17.

The display BIOS 18 is connected to the internal bus 10 through the external bus 19 in the same manner as the display controller 16.

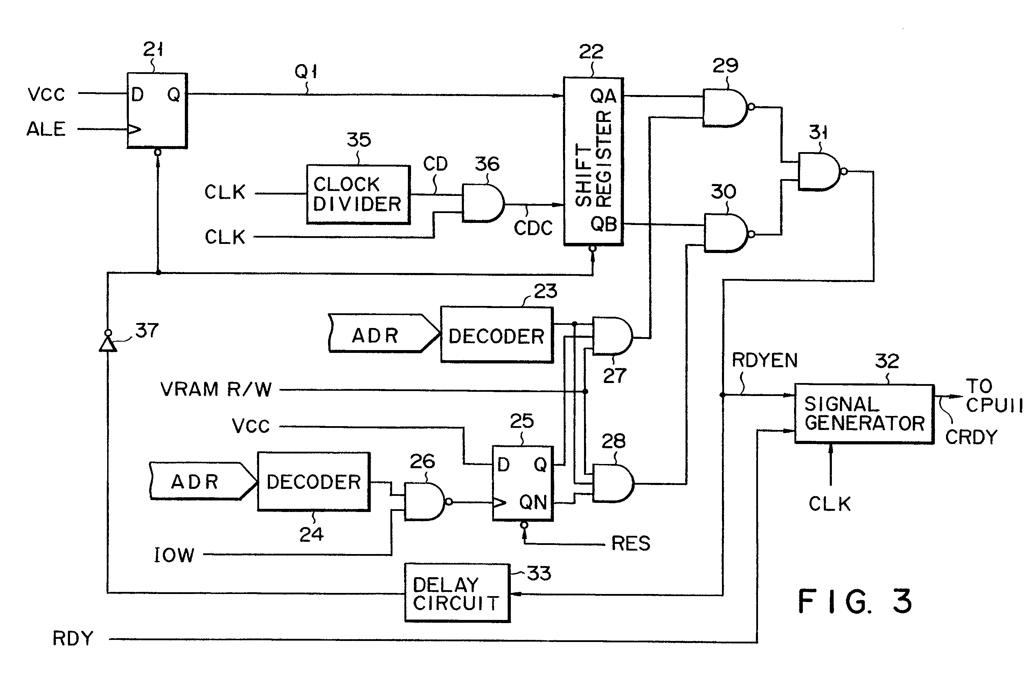

An arrangement of the ready generator 17 will be described in detail with reference to Fig. 3.

A flip-flop 21 outputs a signal Q1 from a terminal Q to operate a shift register 22. Note that VCC and an address latch enable signal ALE are respectively input to a terminal D and a clock terminal of the flip-flop 21.

The shift resistor 22 regulates an output timing of the ready signal CRDY. Note that, in an AND gate 36, an AND process is performed on the basis of the CPU clock signal CLK and a signal CD obtained by frequency-dividing the signal CLK using a clock divider 35. Therefore, the shift register 22 is operated by the output signal Q1 from the terminal Q of the flip-flop 21 and an output signal CDC from the AND gate 36.

A decoder 23 checks whether or not an address signal ADR from the CPU 11 is a VRAM address signal. A decoder 24 checks whether or not an address signal ADR from the CPU 11 is a ready generator address signal.

As will be described later, a flip-flop 25 is set when the display controller 14 is enabled and the display controller 16 is not connected. Note that, when the display controller 14 is not enabled, or when the display controller 16 is connected, the flip-flop 25 is reset in response to a reset signal RES from the BIOS 12.

In a NAND gate 26, a NAND process is performed on the basis of an output signal from the decoder 24 and an I/O write signal IOW. Note that the I/O write signal IOW is used for setting the flip-flop 25.

In an AND gate 27, an AND process is performed on the basis of an output signal from the decoder 23, a VRAM read/write signal (VRAM R/W) for the VRAM 15, and an output signal from the terminal Q of the flip-flop 25.

In an AND gate 28, an AND process is performed on the basis of the output signal from the decoder 23, the VRAM read/write signal (VRAM R/W) for the VRAM 15, and an output signal from a terminal QN of the flip-flop 25.

In a NAND gate 29, a NAND process is performed on the basis of an output signal from a terminal QA of the shift register 22 and an output signal from the AND gate 27.

In a NAND gate 30, a NAND process is performed on the basis of an output signal from a terminal QB of the shift register 22 and an output signal from the AND gate 28.

In a NAND gate 31, a NAND process is performed on the basis of an output signal from the NAND gate 29 and an output signal from the NAND gate 30.

A signal generator 32 outputs the CPU ready signal CRDY to the CPU 11 on the basis of an output signal RDYEN from the NAND gate 31 and the ready signals RDY output from the display controllers 14 and 16 through the internal bus 10. Note that the CPU clock signal CLK is input to the signal generator 32. In addition, the output signal RDYEN from the NAND gate 31 is input to a delay circuit 33.

The delay circuit 33 resets the flip-flop 21 and the shift register 22 on the basis of the signal RDYEN when a predetermined delay time is elapsed. Note that the signal RDYEN is inverted by an inverter 37.

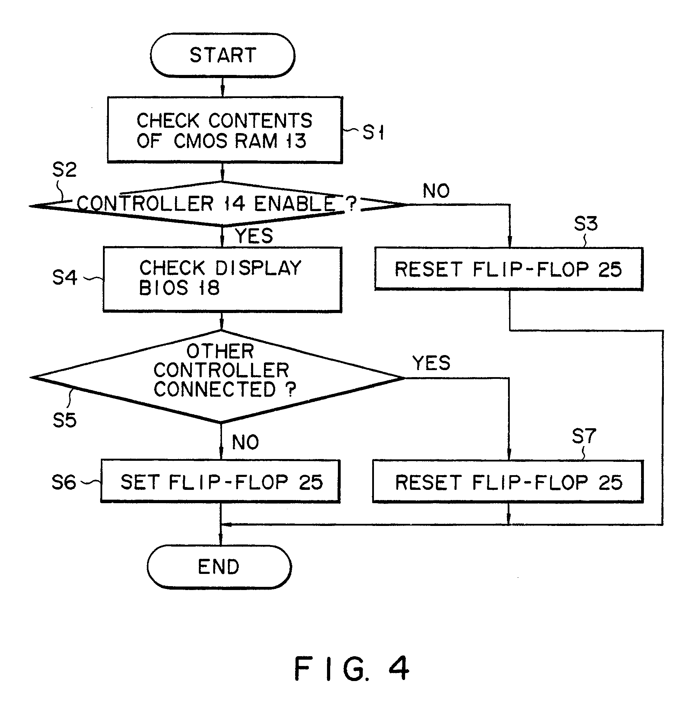

A set/reset operation of the flip-flop 25 by the BIOS 12 in a case wherein the ready generator 17 outputs the CPU ready signal CRDY will be described with reference to a flow chart in Fig. 4.

Contents of the CMOS RAM 13, that is, status data stored in the CMOS RAM 13 are checked in step S1. In step S2, it is determined whether or not the display controller 14 is enabled on the basis of the check result in step S1.

When the display controller 14 is not enabled in step S2, the display controller 14 is not operated, and the flip-flop 25 in the ready generator 17 is reset in response to the reset signal RES from the BIOS 12 (step S3).

When the display controller 14 is enabled in step S2, it is checked whether or not the display BIOS 18 is connected (step S4). In step S5, it is checked whether or not another display controller, i.e., the externally provided display controller 16 is connected on the basis of the check result in step S4.

When the display controller 16 is connected in step S5, the flip-flop 25 is reset in response to the reset signal RES from the BIOS 12 (step S6). Therefore, the display controller 14 is operated at a normal access speed.

When the display controller 16 is not connected in step S5, the flip-flop 25 is set (step S6). Therefore, the display controller 14 is operated at a higher access speed than the normal access speed.

An operation of the ready generator 17 in a case wherein the flip-flop 25 is set, i.e., the display controller 16 is not connected will be described.

When the ready generator address signal from the CPU 11 is detected by the decoder 24, and the I/O write signal IOW is input, an output signal from the NAND gate 26 is input to a clock terminal of the flip-flop 25 as a clock signal. Meanwhile, VCC is input to a terminal D of the flip-flop 25.

The shift register 22 is operated by the signal Q1 output from the terminal Q of the flip-flop 21 in response to the address latch enable signal ALE input to the clock terminal of the flip-flop 21.

As described above, the decoder 23 checks whether or not the address signal from the CPU 11 is the VRAM address signal. When access to the VRAM 15 is performed, the AND gate 27 is turned on in response to the output signal from the decoder 23, the VRAM read/write signal (VRAM R/W), and an output signal from the terminal Q of the flip-flop 25. In addition, the AND gate 28 is turned off in response to the output signal from the decoder 23, the VRAM read/write signal (VRAM R/W), and the output signal from the terminal QN of the flip-flop 25. A CPU wait time "1 WAIT" is set by this operation.

More specifically, the CPU wait time "1 WAIT" is set when the flip-flop 25 is set, the AND gate 27 is turned on, and the AND gate 28 is turned off. As will be described later, a CPU wait time "2 WAIT" is set when the flip-flop 25 is reset, the AND gate 27 is turned off, and the AND gate 28 is turned on.

When the CPU wait time is "1 WAIT" and the output signal from the terminal QA of the shift register 22 is in a high-level, an output signal from the NAND gate 29 becomes a low-level. When one of the output signals from the NAND gates 29 and 30 becomes a low-level, the output signal RDYEN from the NAND gate 31 becomes a high-level, so that the signal generator 32 is enabled. In addition, in response to the output signal RDYEN from the NAND gate 31, the flip-flop 21 and the shift register 22 are reset by the delay circuit 33. The signal generator 32 outputs a CPU ready signal CRDY to the CPU 11 in response to the ready signals RDY from the display controllers 14 and 16.

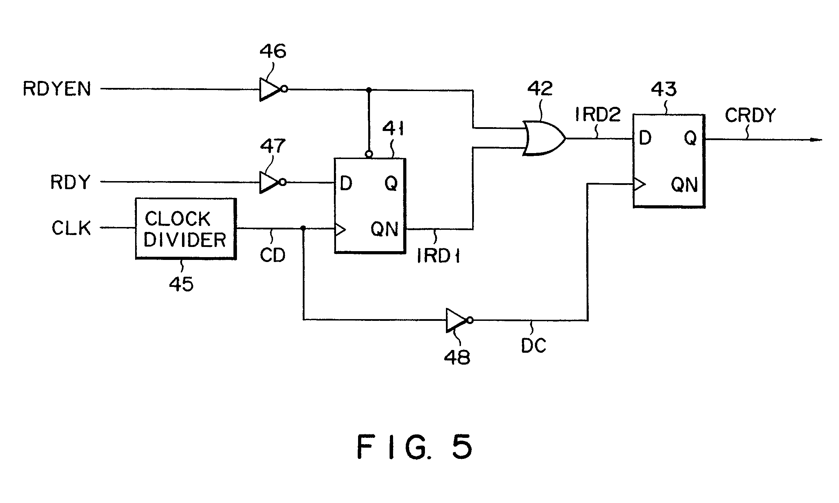

In the signal generator 32 as shown in Fig. 5, when the signal RDYEN is in a high-level, a flip-flop 41 is reset by a signal inverted by an inverter 46. The signal RDY is inverted by an inverter 47, and the inverted signal is input to a terminal D of the flip-flop 41. In addition, a signal (CD) frequency-divided by a clock divider 45 is input to a clock terminal of the flip-flop 41.

The signal inverted by the inverter 46 and an output signal IRD1 from a terminal QN of the flip-flop 41 are input to an OR gate 42. An output signal IRD2 from the OR gate 42 is input to a terminal D of a flip-flop 43. The signal CD is inverted by an inverter 48, and an inverted signal DC is input to a clock terminal of the flip-flop 43. As a result, the CPU ready signal CRDY is output from a terminal Q of the flip-flop 43.

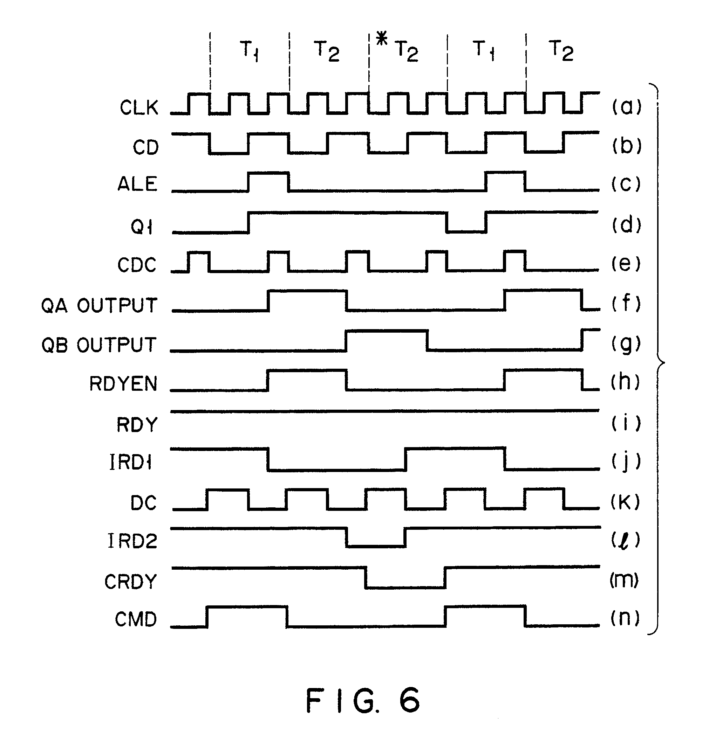

As described above, when the CPU wait time is "1 WAIT", the ready generator 17 is operated at the timings shown in Fig. 6. In Fig. 6, T1 is a CPU fetch time, T2 is a CPU process execution time, and *T2 is a CPU wait time. In Fig. 6, a signal Q1 is output in response to a signal ALE. In addition, signals are output from the terminals QA and QB in response to a signal CDC. When the CPU wait time is "1 WAIT", since the flip-flop 25 is set, a signal RDYEN becomes a high-level in response to the output signal from the terminal QA of the shift register 22.

When a ready signal RDY is in a high-level, a signal IRD1 is output in response to a signal CD. In addition, a signal IRD2 is output in response to an inverted signal of the signal RDYEN and the signal IRD1. As a result, a CPU ready signal CRDY for the CPU 11 is output on the basis of an inverted signal DC of the signal CD. Note that a signal CMD indicates a wait state of the CPU 11.

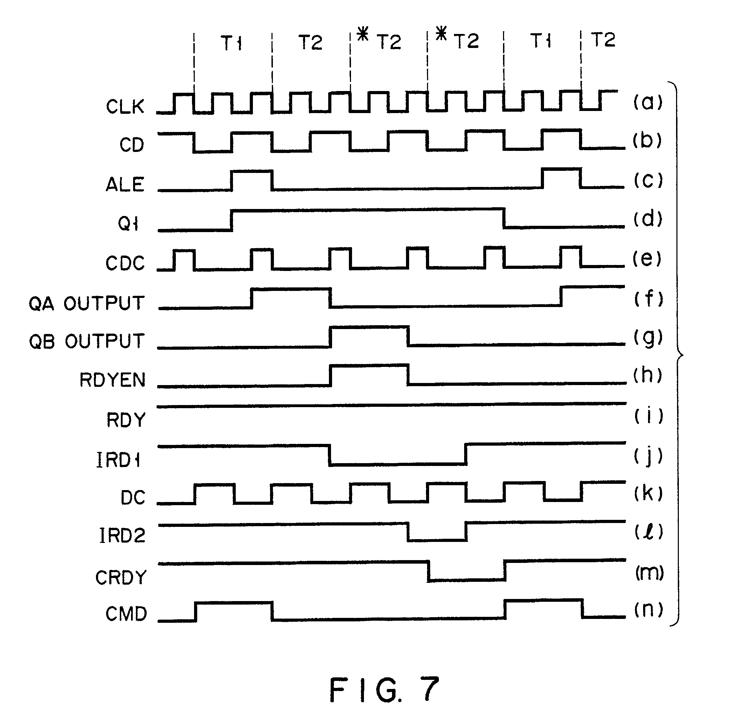

When the CPU wait time is "2 WAIT", the ready generator 17 is operated at the timings shown in Fig. 7. Note that, in Fig. 7, T1 is a CPU fetch time, T2 is a CPU process execution time, and *T2 is a CPU wait time as in Fig. 6. As shown in Fig. 7, the CPU wait time is longer than "1 WAIT" by the time *T2.

As described above, "1 WAIT" or "2 WAIT" is set as the CPU wait time depending on the connection/disconnection of the externally provided display controller 16. The ready generator 17 outputs a CPU ready signal CRDY to the CPU 11 on the basis of the wait time. That is, the CPU ready signal CRDY is output earlier to the CPU 11 when the display controller 16 is connected than a case wherein the display controller 16 is not connected, so that the CPU wait time is shortened. Therefore, the access speed of the display controller 14 and the processing speed of the CPU 11 can be improved.

In this embodiment, although the display controller is used as an I/O controller, the same operation can be performed by other I/O controllers.

## Claims

1. A method for controlling a wait time of a CPU (central processing unit) in a computer capable of connecting an externally provided input/output controller, the computer having an internally provided input/output controller, characterized by comprising the steps of:
checking whether or not the internal provided input/output controller is enabled;
checking whether or not the externally provided input/output controller is connected to the computer;
checking whether or not a subject to be controlled by one of the internally provided input/output controller and the externally provided input/output controller is accessed by the CPU;
setting the wait time in accordance with check results; and
generating a ready signal in response to the set wait time to provide the ready signal to the CPU.

2. The method according to claim 1, characterized in that a desired wait time is set when the internally provided input/output controller is enabled, when the externally provided input/output controller is not connected to the computer, and when the subject is accessed by the CPU.

3. The method according to claim 2, characterized in that the desired wait time is shorter than a wait time when the externally provided input/output controller is connected to the computer.

4. A system for controlling a wait time of a CPU (central processing unit) in a computer capable of connecting an externally provided input/output controller, the computer having an internally provided input/output controller, characterized by comprising:
checking means (12) for checking whether or not the internally provided input/output controller (14) is enabled, checking whether or not the externally provided input/output controller (16) is connected to the computer, and checking whether or not a subject to be controlled by the internally provided input/output controller (14) and the externally provided input/output controller (16) is accessed by the CPU (11);
setting means (17) for setting the wait time in accordance with check results; and
generating means (17) for generating a ready signal in response to the set wait time to provide the ready signal to the CPU (11).

5. The system according to claim 4, characterized in that a desired wait time is set when the internally provided input/output controller (14) is enabled, when the externally provided input/output controller (16) is not connected to the computer, and when the subject is accessed by the CPU (11).

6. The system according to claim 5, characterized in that the desired wait time is shorter than a wait time when the externally provided input/output controller (16) is connected to the computer.

FIG. 1A

FIG. 1B

FIG. 1C

F I G. 2

F I G. 3

START

CHECK CONTENTS
OF CMOS RAM 13 — S1

S2
CONTROLLER 14 ENABLE ? — NO

YES

CHECK DISPLAY
BIOS 18
S4

RESET FLIP-FLOP 25
S3

OTHER
CONTROLLER
CONNECTED ?
S5 — YES

NO

SET FLIP-FLOP 25
S6

RESET FLIP-FLOP 25
S7

END

F I G. 4

RDYEN

RDY

CLK

46

47

CLOCK
DIVIDER

45

CD

41

D    Q

QN

IRD1

42

IRD2

43

D    Q

QN

CRDY

48

DC

F I G. 5

F I G. 6

F I G. 7